# EUROPÄISCHE PATENTSCHRIFT

(11) **EP 1 308 076 B1**
(45) Veröffentlichungstag und Bekanntmachung des Hinweises auf die Patenterteilung: **08.11.2006**
(21) Anmeldenummer: 02020014.3
(22) Anmeldetag: 06.09.2002
(51) Int. Cl.: A01B 71/08, F16D 3/84

(54) **Schutzanordnung für ein Gelenk, insbesondere Doppelkreuzgelenk**
Protective arrangement for double cardan joint in particular
Arrangement protecteur en particulier pour joint à cardan double

(30) Priorität: 05.11.2001 DE 10153822
(43) Veröffentlichungstag der Anmeldung: 07.05.2003
(73) Patentinhaber: GKN Walterscheid GmbH, 53797 Lohmar (DE)
(72) Erfinder: Herchenbach, Paul, 53809 Ruppichteroth (DE); Coenen, Herbert, 53639 Königswinter (DE)
(74) Vertreter: Harwardt, Günther

(56) Entgegenhaltungen:
- DE-A- 3 509 129
- GB-A- 952 078
- GB-A- 2 047 372
- US-A- 2 952 142
- US-A- 5 971 858

## Beschreibung

Die Erfindung betrifft eine Schutzanordnung für ein Gelenk, insbesondere Doppelkreuzgelenk für den Antrieb von oder in Antrieben von landwirtschaftlichen Geräten und Arbeitsmaschinen, mit einem rohrförmigen ersten Schutzelement, das ein erstes axiales Ende und ein zweites axiales Ende aufweist, wobei zumindest das erste axiale Ende offen ist, und welches zum ersten axialen Ende hin einen Befestigungsabschnitt aufweist und das erste Schutzelement an einem ersten Bauteil des Gelenkes gelagert ist.

Solche Schutzanordnungen dienen als Berührungsschutz und werden über Verbindungsmittel ortsfest gehalten, so dass das von der Schutzanordnung umschlossene Gelenk darin rotiert. Die Schutzanordnung soll einen Kontakt von Personen mit den drehenden Bauteilen vermeiden.

Es sind bereits vielfältige Ausbildungsvarianten einer solchen Schutzanordnung bekannt.

So beschreibt die DE-OS 2 046 236 eine Schutzanordnung, bei der dem Gehäuse des Kreuzgelenkes ein erstes Schutzelement zugeordnet ist, welches auf dem Gehäuse und relativ zu diesem drehbar gelagert. Der Anschlussgabel des Doppelkreuzgelenkes ist ein Schutztrichter zugeordnet. Der Gelenkgabel, die mit der Profilwelle verbunden ist, ist eine weitere Schutzanordnung zugeordnet, die ebenfalls ein sich erweiterndes trichterartiges Schutzelement umfasst. Dieses übergreift das mit dem Gehäuse verbundene erste Schutzelement und greift selbst in den Schutztrichter, der der Anschlussgabel zugeordnet ist, ein. Bei großen Abwinklungen ist jedoch keine volle Überde- ckung gegeben. Es entstehen Spalte zwischen den Schutzelementen, die ein Eingreifen von Hand oder das Hineinstecken eines Fingers erlauben.

Eine der vorgenannten Konstruktion vergleichbare Konstruktion ist in der DE 7 322 406 U beschrieben. Dabei sind ebenfalls mehrere glockenförmige Schutzelemente ineinandergeschachtelt, die dafür sorgen sollen, dass ein Eingriff verhindert wird. Eine solche Konstruktion, die insgesamt vier gegeneinander verstellbare Elemente umfasst, ist jedoch aufwendig und für die Praxis nicht geeignet.

Die US 4 605 332 beschreibt eine Schutzanordnung für ein Doppelkreuzgelenk, wobei auf dem Gehäuse des Doppelkreuzgelenkes ein erstes Schutzelement gelagert ist, das einen hohlkugelförmigen Abschnitt umfasst, in dem ein kugeliges Element eines zweiten Schutzelementes, das mittels eines Anschlusselementes auf einer Gelenkgabel gelagert ist, aufgenommen ist. Das Anschlusselement dient zum Anschluss eines Schutzrohres, welches das mit der Gelenkgabel verbundene Verschiebeprofil überdeckt. Aber auch hierbei ist bei großen Abwinklungen zwischen den beiden kugelförmigen Abschnitten der Schutzelemente die Möglichkeit gegeben, dass ein Spalt entsteht, durch den ein Eingriff möglich ist.

Um gänzlich einen Kontakt zu vermeiden, ist in der EP 0641 946 A1 ein Vollschutz beschrieben, bei dem ein Einfachgelenk vollständig von einem Faltenbalg überdeckt wird, der mit einem ortsfesten Anschlusselement verbunden wird. Es hat sich gezeigt, dass solche vollkommen gekapselten Schutzanordnungen für den Einsatz in landwirtschaftlichen Geräten und Arbeitsmaschinen nur schlecht geeignet sind, weil Staub in die Schutzanordnung gelangt, so dass eine Mitnahme der Schutzanordnung in Drehrichtung eintreten kann.

Die GB 952 078 A beschreibt eine Schutzanordnung für ein Kreuzgelenk für den Antrieb von landwirtschaftlichen Geräten. Dem Kreuzgelenk ist ein steifes metallisches und zylindrisch ausgebildetes Schutzrohr zugeordnet. An diesem Schutzrohr ist ein Schutzelement in Form eines Schutztrichters festgelegt, der in Richtung vom Schutzrohr weg offen ist. Dieser Schutztrichter ist in seinem Anschlussbereich zum Schutzrohr hin im Durchmesser gestuft ausgebildet, so dass ein leicht verformbarer Abschnitt erzielt wird, der eine Verformung bei Einwirkung von axialen Kräften zuläßt. Zusatzlich kann die Wandstärke im Bereich des gestuften Abschnittes dünner oder mit Schlitzen gestaltet sein.

Der Erfindung liegt die Aufgabe zugrunde, eine Schutzanordnung vorzuschlagen, die einerseits geeignet ist, den Eingriff von außen zu verhindern, andererseits jedoch gewährleistet, dass in das Innere der Schutzanordnung gelangter Schmutz wieder aus dieser austreten kann.

Diese Aufgabe wird erfindungsgemäß dadurch gelöst, dass ein zweites Schutzelement aus Kunststoff vorgesehen ist, das als beidendig offener Hohlkörper mit einem axial offenen ersten Endabschnitt und einem axial offenen zweiten Endabschnitt und zwischen beiden einem umlaufenden Mantelabschnitt ausgebildet ist,
dessen Mantelabschnitt verteilt angebrachte Durchbrüche oder eine Gitterstruktur aufweist und
dessen erster Endabschnitt mit dem Befestigungsabschnitt des ersten Schutzelementes und dessen zweiter Endabschnitt mit einem Anschlusselement für ein Schutzrohr verbunden ist wobei das Anschlusselement an einem zweiten Bauteil des Gelenkes gelagert ist.

Von Vorteil bei dieser Ausbildung ist, dass über die Gitterstruktur der Schmutz, der in den Innenraum zu den Gelenkbauteilen gelangt ist, wieder austreten kann. Darüber hinaus kann die Gitterstruktur von ihren Abmaßen so gewählt werden, dass ein Eingriff von Hand oder das Hindurchstecken eines Fingers nicht möglich ist. Die Gitterstruktur bzw. die Durchbruchaus-bildung sorgt für die nötige Flexibilität, so dass auch bei großen Abwinklungen eine Anpassung gewährleistet ist. Ferner wird über die Gitterstruktur auch gewährleistet, dass eine drehfeste Verbindung zwischen dem ersten Schutzelement und dem Anschlusselement, mit dem das zweite Schutzelement ebenfalls verbunden ist, erreicht wird. Über die Gitterstruktur kann ein Drehmoment (Schleppmoment) in ausreichendem Maße abgestützt werden.

In Ausgestaltung der Erfindung ist vorgesehen, dass die Gitterstruktur im abgewickelten Zustand des Mantelabschnittes aus untereinander parallelen ersten Stegen und untereinander parallelen zweiten Stegen gebildet ist, wobei sich die ersten Stege und die zweiten Stege in Knotenpunkten schneiden. Die ersten Stege und die zweiten Stege sind an den Knotenpunkten miteinander verbunden. Sie sind also einstückig ausgebildet. Ferner ist es möglich, die Gitterstruktur dadurch zu bilden, dass der Mantelabschnitt in einem Muster angeordnete Durchbrüche aufweist. Diese Durchbrüche können kreisförmig, oval oder rautenförmig oder als Langlöcher gestaltet sein. Vorzugsweise ist der erste Endabschnitt mit einem größeren Durchmesser versehen als der zweite Endabschnitt. Der erste Endabschnitt des zweiten Schutzelementes kann günstig mit dem Befestigungsabschnitt des ersten Schutzelementes durch Formschluss verbunden sein. Hierzu kann beispielsweise der Befestigungsabschnitt einen Kragen aufweisen, der von dem entsprechend gestalteten ersten Endabschnitt des zweiten Schutzelementes übergriffen wird. Zur Verbindung des zweiten Endabschnittes des zweiten Schutzelementes mit einem Anschlusselement, das am Gelenk angebracht ist, ist der zweite Endabschnitt mit einem axial verlaufenden Schlitz versehen. In Umfangsrichtung ist beidendig desselben jeweils eine Verdickung mit einer Bohrung zur Aufnahme einer Schraube vorgesehen.

Im eingebauten Zustand kann eine Anordnung für den Mantelabschnitt derart getroffen sein, dass dieser im Längsschnitt eine Falte bildet. Hierdurch wird bei Abwinklung des ersten Schutzelementes bzw. des Befestigungsabschnittes im Verhältnis zum zweiten Endabschnitt des zweiten Schutzelementes genügend Material zur Verfügung gestellt, um die Verkürzung durch Einrollen und die Verlängerung durch Strecken zuzulassen.

Eine besonders günstige Gestaltung ergibt sich dadurch, dass die Durchbrüche in Umfangsrichtung des Mantelabschnitts auf einer Umfangslinie verteilt angeordnet sind und in Achsrichtung gesehen Reihen bilden, wobei die Durchbrüche, die zu unterschiedlichen Reihen gehören, in Umfangsrichtung des Mantelabschnitts zueinander versetzt sind. Durch eine solche Anordnung werden die Schleppmomente, die bei Rotation des Gelenkes auftreten, günstig aufgenommen.

Eine günstige Verformung des Mantels kann dadurch erreicht werden, dass auf dem Innen- und/oder Außenumfang des Mantelabschnitts Rippen in Umfangsrichtung verlaufend angeordnet sind.

In der Zeichnung ist die Zuordnung einer erfindungsgemäßen Schutzanordnung zu einem Gelenk in Form eines Doppelkreuzgelenkes im Längsschnitt bezüglich der zur Schutzanordnung gehörenden Bauteile dargestellt.

Es zeigt
- Figur 1: einen Längsschnitt der Schutzanordnung in Zuordnung zu einem Gelenk in Form eines Doppelkreuzgelenkes,
- Figur 2: einen Schnitt II-II durch den zweiten Endabschnitt des zweiten Schutzelementes und das zugehörige Anschlusselement,
- Figur 3: eine erste Ausführungsform der Gitterstruktur mit rautenförmigen Durchbrüchen,
- Figur 4: eine zweite Ausführungsform der Struktur mit kreisförmigen Durchbrüchen und Rippen, und
- Figur 5: eine weitere Variante der Gitterstruktur mit Langlöchern als Durchbrüche.

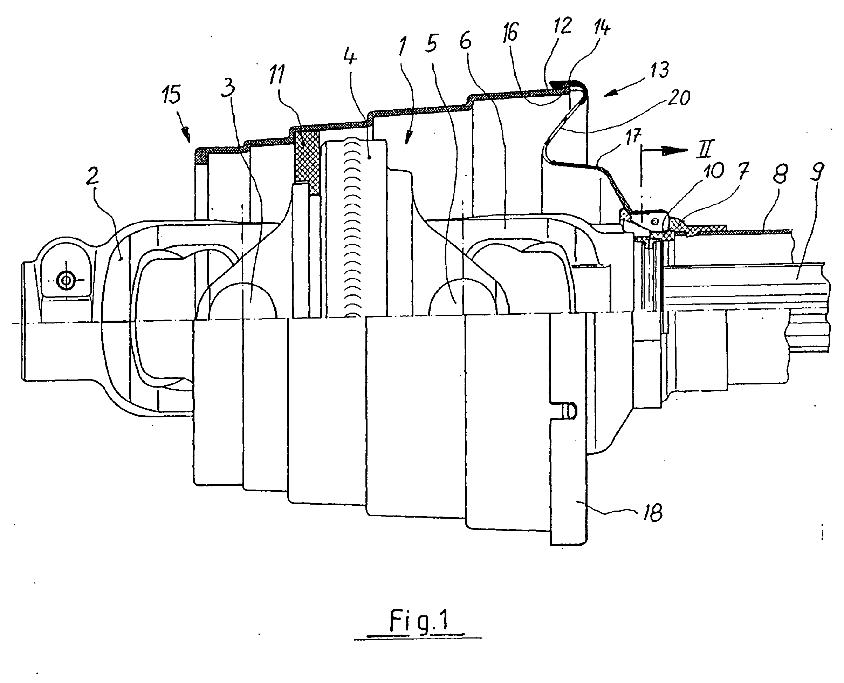

Aus Figur 1 ist ein Gelenk 1 in Form eines Doppelkreuzgelenkes im Halblängsschnitt ersichtlich, wobei dieses eine Anschlussgabel 2 umfasst, die über ein erstes Zapfenkreuz 3 mit der entsprechenden Gelenkgabel eines Gehäuses 4 verbunden ist. Das Gehäuse 4 wiederum ist über ein zweites Zapfenkreuz 5 mit der Gelenkgabel 6 verbunden. In der Beschreibung und den Ansprüchen stellt das Gehäuse 4 das erste Bauteil des Gelenkes und die Gelenkgabel 6 das zweite Bauteil dar. Die Gelenkgabel 6 ist mit einem Profilrohr 9 verbunden. Ein Drehmoment wird beispielsweise über die Anschlussgabel 2, die beiden Zapfenkreuze 3, 5 und das Gehäuse 4 auf die Gelenkgabel 6 und von dieser über das Profilrohr 9 auf eine entsprechende Anordnung mit einem Kreuzgelenk über ein weiteres Profilrohr, das in dem Profilrohr 9 verschiebbar aufgenommen ist, weitergeleitet. Da bei landwirtschaftlichen Geräten und Arbeitsmaschinen häufig eine solche Antriebsanordnung offen liegt, beispielsweise wenn sie zur Weiterleitung der Drehbewegung von der Zapfwelle eines Traktors an das Gerät dient, sind hierfür Schutzanordnungen vorgesehen. Diese Schutzanordnungen sind als stillstehende Schutzanordnungen gestaltet, d.h. sie werden zwar von der Gelenkanordnung getragen, rotieren jedoch nicht mit dieser, weil sie über nicht dargestellte Mittel mit einem ortsfesten Teil des Gerätes verbunden werden. Die zur gesamten Schutzanordnung gehörenden Bauteile sind untereinander so verbunden, dass sie eine drehfeste Verbindung bewerkstelligen, so dass sämtliche Bauteile stillstehen. Die erfindungsgemäße Schutzanordnung wird nachfolgend beispielhaft anhand einer Schutzanordnung für das vorbeschriebene Gelenk 1 in Form eines Doppelkreuzgelenkes erläutert.

Auf der Gelenkgabel 6 ist ein Anschlusselement 7 angebracht, das zur Verbindung mit einem inneren Schutzrohr 8 dient, welches das Profilrohr 9 überdeckt. Das Anschlusselement 7 umfasst einen Lagerring, mit dem es auf der Gelenkgabel 6 gelagert ist, welcher hierzu in eine Nut der Gelenkgabel 6 eingreift. Das Anschlusselement 7 ist mit einer Sitzfläche 10 versehen.

Das erste Schutzelement 12 ist über einen Lagerring 11 an dem Gehäuse 4 gelagert, wozu dieses ebenfalls eine Nut aufweist, in welche der Lagerring 11 eingreift.

Das erste Schutzelement 12 weist ein erstes axiales Ende 13 und dazu beabstandet ein zweites axiales Ende 15 auf. Es ist rohrförmig gestaltet und weist beim vorliegenden Ausführungsbeispiel einen vom ersten axialen Ende 13 zum zweiten axialen Ende 15 sich verkleinernden Durchmesser auf. An dem ersten axialen Ende 13 ist ferner ein nach außen gerichteter Kragen 14 vorgesehen, der zum Befestigungsabschnitt 16 des ersten axialen Endes 13 gehört.

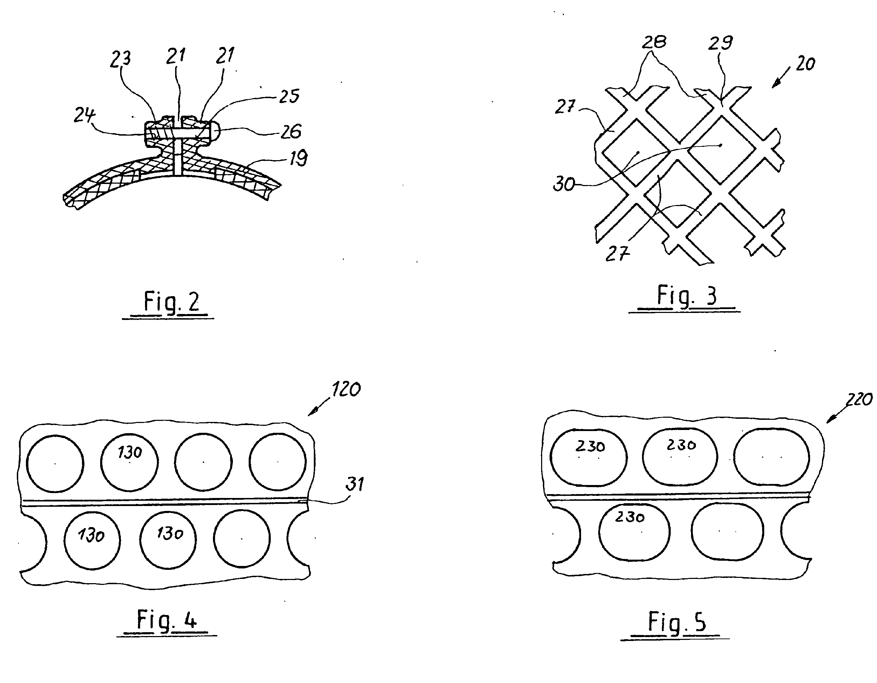

Ein zweites Schutzelement 17 ist mit einem ersten Endabschnitt 18 versehen, mit dem es formschlüssig an dem Befestigungsabschnitt 16 des ersten Schutzelementes 12 festgelegt ist. Es weist ferner einen dazu im Durchmesser verringerten zweiten Endabschnitt 19 auf. Dieser dient zur Festlegung an der Sitzfläche 10 des Anschlusselementes 7. Hierzu ist der zweite Endabschnitt 19 axial geschlitzt. Der Schlitz 21 ist insbesondere in Figur 2 zu sehen. In Umfangsrichtung ist beidseitig des Schlitzes 21 dem zweiten Endabschnitt 19 jeweils eine Verdickung 22 bzw. 23 angeformt, die jeweils eine Bohrung 24 bzw. 25 aufweisen, in welche eine Schraube 26, die beispielsweise selbstschneidend ist, eingreift. Es ist jedoch auch möglich, den Endabschnitt 19 axial zu schlitzen und durch ein Spannelement in Form eines Spannbandes oder Kappe festzulegen.

Der zwischen dem ersten Endabschnitt 18 und dem zweiten Endabschnitt 19 befindliche Mantelabschnitt 20 weist eine Gitterstruktur auf. Darüber hinaus ist er, wie aus dem Längsschnitt gemäß Figur 1 zu ersehen, faltenförmig verlaufend gebogen. Durch die Falte kann das Einrollen auf der Stauchseite und das Strecken auf der Dehnseite bei Abwinklung der Anschlussgabel im Verhältnis zur Gelenkgabel gewährleistet werden. Die Gitterstruktur des Mantelabschnittes 20 und Abwandlungen zu dieser sind in den Figuren 3 bis 5 näher dargestellt und anhand derselben erläutert, wobei die Figuren 3 bis 5 jeweils nur Abschnitte einer Abwicklung des Mantelabschnittes 20 zeigen. Bei der ersten Ausführungsform weist der Mantelabschnitt 20 erste Stege 27 auf, die untereinander parallel verlaufen. Diese werden von zweiten Stegen 28 geschnitten, die untereinander parallel verlaufen. Die ersten Stege 27 und die zweiten Stege 28 schneiden sich in Knotenpunkten 29, an denen sie miteinander verbunden sind. Sie umschließen gemeinsam jeweils rautenförmige Durchbrüche 30.

Die Figur 4 zeigt eine abgewandelte Form der Struktur des Mantelabschnitts, weshalb in Figur 4 der Mantelabschnitt als Variante zur Ausbildung gemäß Figur 3 mit 120 bezeichnet ist. Der Mantelabschnitt weist kreisförmige Durchbrüche 130 auf, die reihenweise auf Umfanglinien des Mantelabschnitts 120 angeordnet sind, wobei die Durchbrüche der Reihen umfangsmäßig versetzt angeordnet sind. Darüber hinaus befindet sich zumindest zwischen zwei Reihen eine Rippe 31, die auf dem Außenumfang des Mantelabschnitts 120 angeordnet ist. Alternativ ist es möglich, wie in Figur 5 dargestellt, für einen Mantelabschnitt 220 die Gitterstruktur durch ovale Durchbrüche 230 zu bilden, wobei auch hier eine Gitterstruktur dadurch erzielt werden kann, dass ovale Ringe aneinanderhängend gefertigt werden. Das so aufgebaute zweite Schutzelement kann durch Spritzgießen aus einem Kunststoff hergestellt werden.

### Bezugszeichenliste

- 1: Doppelkreuzgelenk
- 2: Anschlussgabel
- 3: erstes Zapfenkreuz
- 4: Gehäuse / erstes Bauteil
- 5: Zweites Zapfenkreuz
- 6: Gelenkgabel / zweites Bauteil
- 7: Anschlusselement
- 8: Inneres Schutzrohr
- 9: Profilrohr
- 10: Sitzfläche
- 11: Lagerring
- 12: erstes Schutzelement
- 13: erstes axiales Ende
- 14: Kragen
- 15: Zweites axiales Ende
- 16: Befestigungsabschnitt
- 17: Zweites Schutzelement
- 18: erster Endabschnitt
- 19: Zweiter Endabschnitt
- 20,120, 220: Mantelabschnitt
- 21: Schlitz
- 22: Verdickung
- 23: Verdickung
- 24: Bohrung
- 25: Bohrung
- 26: Schraube
- 27: Erste Stege
- 28: zweite Stege
- 29: Knotenpunkt
- 30,130, 230: Durchbruch
- 31: Rippe

## Patentansprüche

1. Schutzanordnung für ein Gelenk (1), insbesondere Doppelkreuzgelenk für den Antrieb von oder in Antrieben von landwirtschaftlichen Geräten und Arbeitsmaschinen, mit einem rohrförmigen ersten Schutzelement (12), das ein erstes axiales Ende (13) und ein zweites axiales Ende (15) aufweist, wobei zumindest das erste axiale Ende (13) offen ist, und welches zum ersten axialen Ende (13) hin einen Befestigungsabschnitt (16) aufweist und das erste Schutzelement (12) an einem ersten Bauteil (4) des Gelenkes (1) gelagert ist,
**dadurch gekennzeichnet,**
**dass** ein zweites Schutzelement (17) aus Kunststoff vorgesehen ist, das als beidendig offener Hohlkörper mit einem axial offenen ersten Endabschnitt (18) und einem axial offenen zweiten Endabschnitt (19) und zwischen beiden einem umlaufenden Mantelabschnitt (20, 120, 220) ausgebildet ist,
dessen Mantelabschnitt (20, 120, 220) verteilt angebrachte Durchbrüche (130, 230) oder eine Gitterstruktur (27, 28, 29) aufweist und
dessen erster Endabschnitt (18) mit dem Befestigungsabschnitt (16) des ersten Schutzelementes (12) und dessen zweiter Endabschnitt (19) mit einem Anschlusselement (7) für ein Schutzrohr (8) verbunden ist, wobei das Anschlusselement (7) an einem zweiten Bauteil (6) des Gelenkes (1) gelagert ist.

2. Schutzanordnung nach Anspruch 1,
**dadurch gekennzeichnet,**
**dass** die Gitterstruktur im abgewickelten Zustand des Mantelabschnittes (20) aus untereinander parallelen ersten Stegen (27) und untereinander parallelen zweiten Stegen (28) gebildet ist, die sich in Knotenpunkten (29) schneiden.

3. Schutzanordnung nach Anspruch 1,
**dadurch gekennzeichnet,**
**dass** die Gitterstruktur dadurch gebildet ist, dass der Mantelabschnitt (20, 120, 220) in einem Muster angeordnete Durchbrüche (30, 130, 230) aufweist.

4. Schutzanordnung nach Anspruch 3,
**dadurch gekennzeichnet,**
**dass** die Durchbrüche (30, 130, 230) kreisförmig, oval oder rautenförmig oder als Langloch gestaltet sind.

5. Schutzanordnung nach Anspruch 1,
**dadurch gekennzeichnet,**
**dass** der erste Endabschnitt (18) einen größeren Durchmesser aufweist als der zweite Endabschnitt (19).

6. Schutzanordnung nach Anspruch 1,
**dadurch gekennzeichnet,**
**dass** der Mantelabschnitt (20, 120, 220) im Längsschnitt gesehen eine Falte bildet.

7. Schutzanordnung nach Anspruch 3,
**dadurch gekennzeichnet,**
**dass** die Durchbrüche (130) in Umfangsrichtung des Mantels auf einer Umfangslinie verteilt angeordnet sind und in
Achsrichtung gesehen Reihen bilden, wobei die Durchbrüche, die zu unterschiedlichen Reihen gehören, in Umfangsrichtung des Mantels zueinander versetzt sind.

8. Schutzanordnung nach Anspruch 1,
**dadurch gekennzeichnet,**
**dass** auf dem Innen- und/oder Außenumfang des Mantelabschnitts (120) Rippen (31) in Umfangsrichtung verlaufend angeordnet sind.

## Claims

1. A protective arrangement for a joint (1), more particularly for a double universal joint for driving, or for being used in the drives of agricultural implement and self propelled machines, having a tubular first protective element (12) which comprises a first axial end (13) and a second axial end (15), wherein at least the first axial end (13) is open and which, towards the first axial end (13), comprises a fixing portion (16) and wherein the first protective element (12) is supported at a first component (4) of the joint(1),
**characterised in**
**that** there is provided a second protective element (17) which is provided in the form of a hollow member open at both ends and having an axially open first end portion (18) and an axially open second end portion (19) and arranged between the two a circumferentially extending envelope portion (20, 120, 220),
the envelope portion (20, 120, 220) of which comprises distributed by arranged apertures (130, 230) or a grid structure (27, 28, 29) and
whose first end portion (18) is connected to the fixing portion (16) of the first protective element (12) and whose second end portion (19) is connected to an attaching element (17) for a protective tube (8), wherein the attaching element (7) is supported on a second component (6) of the joint (1).

2. A protective arrangement according to claim 1,
**characterised in**
**that** the grid structure, in the developed condition of the envelope portion (20) is formed of first webs (27) extending parallel relative to one another and second webs (28) extending parallel relative to one another, which webs (27, 28) intersect one another in nodal points.

3. A protective arrangement according to claim 1,
**characterised in**
**that** the grid structure is formed in such a way that the envelope portion (20, 120, 220) comprises apertures (30, 130, 230) arranged in a pattern.

4. A protective arrangement according to claim 3,
**characterised in**
**that** the apertures (30, 130, 230) are circular, oval or rhomb-shaped or formed as an elongated hole.

5. A protective arrangement according to claim 1,
**characterised in**
**that** the first end portion (18) comprises a greater diameter than the second end portion (19).

6. A protective arrangement according to claim 1,
**characterised in**
**that**, if viewed in a longitudinal section, the envelope portion (20, 120, 220) forms a fold.

7. A protective arrangement according to claim 3,
**characterised in**
**that** the apertures (130), in the circumferential direction of the envelope portion, are arranged so as to be distributed on a circumferential line and, if viewed in the axial direction, form rows, wherein the apertures associated with different rows are offset relative to one another in the circumferential direction of the envelope portion.

8. A protective arrangement according to claim 1,
**characterised in**
**that**, on the inner and/or outer circumference of the envelope portion (120), ribs (31) are arranged so as to extend in the circumferential direction.

## Revendications

1. Arrangement de protection pour un joint articulé de transmission (1), notamment un joint universel à cardan double, destiné à l'entraînement ou prévu dans le système d'entraînement d'appareils ou de machines de travail agricoles, comprenant un premier élément de protection (12) tubulaire, qui présente une première extrémité axiale (13) et une deuxième extrémité axiale (15), au moins la première extrémité axiale (13) étant ouverte, et qui présente, en direction de la première extrémité axiale (13), un tronçon de fixation (16), et le premier élément de protection (12) étant monté sur une première pièce constitutive (4) du joint articulé de transmission (1),
**caractérisé en ce qu'**il est prévu un deuxième élément de protection (17) en matière plastique, réalisé en tant que corps creux ouvert aux deux extrémités et présentant un premier tronçon d'extrémité (18) ouvert axialement et un deuxième tronçon d'extrémité (19) ouvert axialement, et entre les deux, un tronçon d'enveloppe périphérique (20, 120, 220),
dont le tronçon d'enveloppe (20, 120, 220) présente des ouvertures de passage (130, 230) ou une structure en treillis (27, 28, 29), et
dont le premier tronçon d'extrémité (18) est relié au tronçon de fixation (16) du premier élément de protection (12), et dont le deuxième tronçon d'extrémité (19) est relié à un élément de raccordement (7) pour un tube de protection (8), l'élément de raccordement (7) étant monté sur une deuxième pièce constitutive (6) du joint articulé de transmission (1).

2. Arrangement de protection selon la revendication 1, **caractérisé en ce que** la structure en treillis est formée, dans l'état développé du tronçon d'enveloppe (20), de premières nervures (27) parallèles entre-elles et de deuxièmes nervures (28) parallèles entre-elles, qui se coupent en des points d'intersection ou noeuds d'intersection (29).

3. Arrangement de protection selon la revendication 1, **caractérisé en ce que** la structure en treillis est formée grâce au fait que le tronçon d'enveloppe (20, 120, 220) présente des ouvertures de passage (30, 130, 230) agencées selon un motif.

4. Arrangement de protection selon la revendication 3, **caractérisé en ce que** les ouvertures de passage (30, 130, 230) sont d'une configuration de forme circulaire, ovale ou en losange, ou sont réalisées en tant que trous oblongs.

5. Arrangement de protection selon la revendication 1, **caractérisé en ce que** le premier tronçon d'extrémité (18) présente un diamètre plus grand que le deuxième tronçon d'extrémité (19).

6. Arrangement de protection selon la revendication 1, **caractérisé en ce que** le tronçon d'enveloppe (20, 120, 220) forme, vu en coupe longitudinale, un pli.

7. Arrangement de protection selon la revendication 3, **caractérisé en ce que** les ouvertures de passage (130) sont agencées, dans la direction périphérique de l'enveloppe, de manière répartie sur une ligne périphérique, et forment des rangées, vu dans la direction axiale, les ouvertures de passage faisant partie de rangées différentes étant décalées les unes par rapport aux autres dans la direction périphérique de l'enveloppe.

8. Arrangement de protection selon la revendication 1, **caractérisé en ce que** sur la périphérie intérieure et/ou extérieure du tronçon d'enveloppe (120), sont agencées des nervures (31) s'étendant dans la direction périphérique.
